# EUROPÄISCHE PATENTSCHRIFT

(11) **EP 3 489 458 B1**
(45) Veröffentlichungstag und Bekanntmachung des Hinweises auf die Patenterteilung: **11.12.2019**
(21) Anmeldenummer: 18202527.0
(22) Anmeldetag: 25.10.2018
(51) Int. Cl.: E21D 11/38, E21D 11/08, B28B 23/00

(54) **DICHTUNGSPROFIL ZUR EINBETTUNG IN EIN FORMTEIL AUS AUSHÄRTBAREM MATERIAL**
SEALING PROFILE FOR EMBEDDING INTO A MOULDED FORM MADE OF CURABLE MATERIAL
PROFILÉ D'ÉTANCHÉITÉ DESTINÉ À ÊTRE INCORPORÉ DANS UNE PIÈCE MOULÉE EN MATÉRIAU DURCISSABLE

(30) Priorität: 24.11.2017 DE 202017107155 U
(43) Veröffentlichungstag der Anmeldung: 29.05.2019
(73) Patentinhaber: Dätwyler Sealing Technologies Deutschland GmbH, 99880 Waltershausen (DE)
(72) Erfinder: Klug, Matthias, 99817 Eisenach (DE); Stender, Matthias, 99867 Gotha (DE)
(74) Vertreter: Stüven, Ralf

(56) Entgegenhaltungen:
- EP-A1- 0 060 134
- EP-A1- 2 666 959
- WO-A1-2017/134420

## Beschreibung

Die Erfindung betrifft ein Dichtungsprofil zur Einbettung in ein Formteil aus aushärtbarem Material, insbesondere ein Beton- oder Kunststoffformteil, und eine ein solches Dichtungsprofil umfassende Dichtanordnung.

Schacht- und Tunnelbauten sind regelmäßig aus einzelnen monolithischen Fertigbauteilen (Tübbingen) zusammengesetzt, zwischen denen Kontaktfugen vorhanden sind, die mit geeigneten Dichtungen abgedichtet werden, um beispielsweise ein Eindringen von umgebendem Medium (z.B. Wasser) zu verhindern. Die Herstellung solcher Tübbinge erfolgt in der Regel mit Hilfe von Schalungsformen, wie sie beispielsweise aus DE 4218710 C1, DE 10 2007 032 236 A1 oder DE 19841047 C1 bekannt sind. Dabei wird ein aushärtbares Material, z.B. Beton, in die Schalungsform gegossen, die nach dem Aushärten des Materials geöffnet und entfernt wird. Dichtungen zur Abdichtung der Kontaktfugen können nach dem Aushärten eines Formteils in dafür vorgesehenen umlaufenden Nuten in den Stoßseiten der Fertigbauteile angeordnet werden. Ein Beispiel für eine solche Dichtung ist in DE 2833345 A1 beschrieben. Häufig werden die Dichtungen, die zur Abdichtung der Fugen erforderlich sind, die später beim Zusammensetzen der Fertigbauteile zu einem Schacht oder Tunnel entstehen, jedoch bereits beim Gießen in die Fertigbauteile integriert, indem sie mit eingegossen und verankert werden. Dichtungen, die zur Einbettung in Fertigbauteile aus aushärtbaren Material, wie Rohre, Tübbinge, Schachtringe und dergleichen, vorgesehen sind, sind in der Regel mit so genannten Verankerungsfüßen versehen, die beim Gießen des Fertigbauteils von dem aushärtbaren Material umschlossen werden und dazu dienen sollen, die Dichtung zuverlässig im ausgehärteten Fertigbauteil zu halten. WO 2017/134420 offenbart eine solche Dichtung. Es kommt jedoch trotzdem beim Einbau der Fertigbauteile, z.B. Tübbinge, immer wieder zu Verschiebungen der Dichtung in dem Fertigbauteil. Insbesondere bei rahmenartig ausgestalteten strangförmigen Dichtungen, wie sie häufig im Tunnelbau bei Tunneltübbingen eingesetzt werden, kann es durch die Verschiebung in Längsrichtung des Profilstrangs beispielsweise zur Deformation der Dichtung im Bereich der Rahmenecken kommen.

Aufgabe der vorliegenden Erfindung ist es, ein Dichtungsprofil zur Einbettung in ein Formteil aus aushärtbarem Material bereitzustellen, das die Nachteile bekannter Dichtungsprofile nicht aufweist, insbesondere so in dem Formteil verankert werden kann, dass es beim Ein- oder Zusammenbau der Fertigteile, nicht oder in deutlich geringerem Ausmaß zu Verschiebungen der Dichtung in ihrem Sitz kommt.

Gelöst wird die Aufgabe durch ein Dichtungsprofil zur Einbettung in ein Formteil aus aushärtbarem Material, insbesondere ein Beton- oder Kunststoffformteil, wobei das Dichtungsprofil sich in einer Längsrichtung strangförmig erstreckt und mindestens einen Verankerungsfuß zur Verankerung des Dichtungsprofils in das Formteil aufweist, und wobei der mindestens eine Verankerungsfuß Ausnehmungen, Querschnittsverminderungen, Querschnittsverdickungen und/oder Fortsätze aufweist, die sich in der Längrichtung des Dichtungsprofils diskontinuierlich erstrecken.

Die in der Praxis beobachteten Verschiebungen einer strangförmigen Dichtung in Längsrichtung, die beispielsweise beim Aneinanderlegen von Formteilen aus aushärtbarem Material, in die solche Dichtungen eingebettet sind, aufgrund der dabei auftretenden Kräfte vorkommen können, werden mit der Erfindung wirksam verhindert. Das erfindungsgemäße Dichtungsprofil sieht hierzu an den Verankerungsfüßen Profilbereiche vor, die gegenüber der allgemeinen äußeren Oberfläche der Verankerungsfüße vor- oder zurückspringen, so dass Ausnehmungen, Querschnittsverminderungen, Querschnittsverdickungen und/oder Fortsätze gebildet sind, in die das aushärtbare Material eingreift oder die in das aushärtbare Material hineinragen. Diese Profilbereiche sind in Längsrichtung des Dichtungsprofils diskontinuierlich ausgestaltet, so dass das aushärtbare Material in Längsrichtung des Dichtungsprofils nur punktuell oder abschnittsweise mit dem Dichtungsprofil in Eingriff gebracht ist, wodurch eine formschlüssige Verbindung zwischen Dichtungsprofil und Formteil resultiert, die dafür sorgt, dass das Dichtungsprofil auch eine bessere Verankerung hinsichtlich Kräften erfährt, die in Längsrichtung des Profils wirken.

Es wird angenommen, dass die bei integrierten strangförmigen Dichtungen nach dem Stand der Technik auftretenden Verschiebungen darauf zurückzuführen sind, dass die Verankerungsfüße in Längsrichtung des Dichtungsprofils kontinuierlich ohne Querschnittsveränderungen ausgebildet sind und einer Kraftwirkung in dieser Richtung nicht vollständig standhalten können, so dass es zu Verschiebungen und beispielsweise Stauchungen der Dichtung in ihrem Sitz, beispielsweise einer entsprechenden Nut, kommen kann. Kerngedanke der vorliegenden Erfindung ist es daher, solche Verschiebungen zu verhindern, indem die Verankerungsfüße in Profillängsrichtung nicht immer den gleichen Querschnitt beibehalten, sondern der Querschnitt sich punktuell oder abschnittweise in Längsrichtung ändert, so dass die Verankerungfüße auch in Längsrichtung formschlüssig mit dem aushärtbaren Material des Formteils in Eingriff bringbar sind.

Unter einem "Tübbing" werden vorgefertigte Bauteile der Außenschale von Tunneln, Schächten, Rohren etc. verstanden. Es kann sich beispielsweise um ringsegment- oder ringförmige Bauteile, z.B. aus Beton, handeln.

Unter einem "aushärtbaren Material" wird hier ein zunächst fließ fähiges, später jedoch unter Normalbedingungen von selbst oder unter äußerem Einfluss, z.B. von Wärme, UV-Licht etc., aushärtendes Material verstanden. Es kann sich dabei beispielsweise um Beton, Kunstharz, Klebstoff und ähnliches handeln. Es kann sich beispielsweise auch um ein faserhaltiges Kunstharz handeln, das zu einem faserverstärkten Kunststoff, beispielsweise GFK, aushärtet.

Unter einem "Dichtungsprofil" wird hier ein vorzugsweise strangförmiges, gegebenenfalls rahmenartig bzw. ringförmig geschlossenes, Elastomerprofil mit Dichtungsfunktion verstanden, beispielsweise eine Tübbingdichtung, Beton- oder Kunststoffrohrdichtung oder Schachtdichtung.

Ein "Elastomerprofil" ist ein Dichtungsprofil aus elastomerem Material. Beispiele für geeignete elastomere Materialien sind Naturkautschuk (NR), Styrol-Butadien-Kautschuk (SBR), Butylkautschuk (IIR), Ethylen-Propylenkautschuk (EPDM), Butadien-Acrylnitrilkautschuk (NBR), hydrierter Acrylnitrilkautschuk (HNBR) Chloroprenkautschuk (CR), chlorsulfoniertes Polyethylen (CSM), Polyacrylatkautschuk (ACM), Polyurethankautschuk (PU), Silikonkautschuk (Q), Fluorsilikonkautschuk (MFQ) und Fluorkautschuk (FPM). Bevorzugt sind EPDM, SBR, CR oder NBR, besonders bevorzugt EPDM, wobei das elastomere Material vorzugsweise eine Shorehärte von 60-80° aufweist. Der Begriff erfasst auch Profile aus thermoplastischem Elastomer (TPE) oder Profile aus Mischungen von Elastomeren, beispielsweise den oben genannten. Ein Dichtungsprofil kann auch bereichsweise aus unterschiedlichen Elastomermaterialien bestehen. Beispielsweise kann der Rückenteil eines Tübbingprofils, d.h. der Profilbereich, mit dem das Profil in eine Schalungsform eingesetzt ist, aus einem anderen, zum Beispiel härteren, Elastomermaterial bestehen als die Basis des Profils, oder umgekehrt. Profile, die Bereiche aus unterschiedlichen elastomeren Materialien aufweisen, können beispielsweise durch Koextrusion hergestellt sein.

Unter dem Begriff "integrierte Dichtung" wird hier ein Dichtungsprofil verstanden, das zur Einbettung in ein Formteil aus aushärtbarem Material vorgesehen und entsprechend ausgestaltet, z.B. mit mindestens einem Verankerungsfuß oder sonstigen Einrichtungen zur Einbettung des Dichtungsprofils in das aushärtbares Material ausgestattet ist.

Unter einem "Verankerungsfuß" wird hier ein Profilfortsatz verstanden, der in das spätere Formteil hineinragt und einen Kraftschluss oder bevorzugt einen Formschluss zwischen Profil und Formteil bewirkt, so dass das Profil an bzw. in dem ausgehärteten Formteil so befestigt ist, dass es ohne Beschädigung des Formteils und/oder des Profils (z.B. durch Abreißen des Profilfortsatzes) nicht oder nur schwer entfernt werden kann. Hierzu können die Profilfortsätze beispielsweise schwalbenschwanzartig, allgemein mit einem zum Fortsatzende hin zunehmenden Querschnitt oder anderen Verankerungsgeometrien ausgestaltet sein.

Der Begriff "strangförmig" in Bezug auf ein Dichtungsprofil bedeutet, dass das Dichtungsprofil einen länglichen, im Wesentlichen linearen Profilstrang bildet. Ein Beispiel für regelmäßig strangförmig ausgebildete Dichtungsprofile sind Tübbingdichtungen, die in Nuten entlang der Stirnseiten von Tübbingen angeordnet werden. Die Enden von strangförmigen Dichtungsprofilen können gegebenenfalls unter Ausbildung eines Rahmens oder Rings zusammengefügt sein.

Der Begriff "diskontinuierlich" in Bezug auf die Ausnehmungen, Querschnittsverminderungen, Querschnittsverdickungen und/oder Fortsätze des mindestens einen Verankerungsfußes bedeutet, dass die Ausnehmungen, Querschnittsverminderungen, Querschnittsverdickungen und/oder Fortsätze sich nicht in Längsrichtung gleichbleibend über das gesamte Dichtungsprofil erstrecken, sondern punktuell oder abschnittsweise entlang des Profils angeordnet sind. Anders ausgedrückt bedeutet dies, dass der Querschnitt des mindestens einen Verankerungsfußes in Längsrichtung des Dichtungsprofils nicht im Wesentlichen unverändert bleibt, sondern sich punktuell oder abschnittsweise ändert.

Der Begriff "Ausnehmung" in Bezug auf den mindestens einen Verankerungsfuß bedeutet, dass Profilmaterial im Bereich des mindestens einen Verankerungsfußes entfernt oder ausgespart ist, so dass beispielsweise ein Rücksprung, eine Nut, Aushöhlung, Kerbe, Auskehlung, Vertiefung, Hinterschneidung, Mulde, Einbuchtung oder dergleichen gebildet wird.

Die Begriffe "Querschnittsverminderung" bzw. "Querschnittsverdickung" in Bezug auf den mindestens einen Verankerungsfuß bedeutet, dass der Querschnitt des mindestens einen Verankerungsfußes in Längsrichtung des Dichtungsprofils gegenüber dem allgemeinen Querschnitt des Verankerungsfußes punktuell oder abschnittweise abnimmt oder zunimmt.

Der Begriff "Fortsatz" bezieht sich auf von dem mindestens einen Verankerungsfuß ausgehende über dessen allgemeinen Querschnitt hinaus sich erstreckende Verlängerungen. Insbesondere bezieht sich der Begriff auf sich im Wesentlichen quer zur Längsrichtung des Profils sich erstreckende Verlängerungen. Die Fortsätze können mit dem Material des mindestens einen Verankerungsfußes integral ausgebildet sein. Sie können aber auch separate Gebilde sein, die auf geeignete Weise mit dem mindestens einen Verankerungsfuß verbunden sind, beispielsweise mittels Verklebung oder dergleichen. Fortsätze können beispielsweise auch aus einem anderen Material als das Dichtungsprofil bestehen. Fortsätze können verschiedene Formen haben und beispielsweise stiftförmig, mit oder ohne Verdickung der Enden sein.

Unter dem Begriff "Profilbasis" wird hier der Teil des Dichtungsprofils verstanden, der nach dessen Verankerung dem Formteil zugewendet ist und an dem der mindestens eine Verankerungsfuß angeordnet ist. Der Begriff "Profilrücken" bezeichnet den der Profilbasis im Wesentlichen gegenüberliegenden Teil des Dichtungsprofils, der im fertigen Formteil die Dichtfläche bereitstellt, die beispielsweise im Falle von Tübbingen für den Tunnelbau am Profilrücken eines Dichtungsprofils in einem benachbarten Formteil anliegt. Der Begriff "Profilflanke" bezeichnet zwischen Profilbasis und Profilrücken liegende seitliche Bereiche des Dichtungsprofils.

Die Ausnehmungen, Querschnittsverminderungen, Querschnittsverdickungen und/oder Fortsätze müssen sich in Richtung Profilbasis oder Profilkörper, d.h. in Richtung quer zur Längsrichtung des Dichtungsprofils nicht durchgehend vom Ursprung bis zum distalen Ende über den ganzen Verankerungsfuß erstrecken, sondern können auch lediglich abschnittsweise oder punktuell vorgesehen sein. Dies kann in Fällen bevorzugt sein, in denen der mindestens eine Verankerungsfuß eine Verankerungsgeometrie aufweist, die in Richtung quer zur Profillängsrichtung und zum Profilkörper hin lediglich eine kraftschlüssige Verbindung mit einem Formteil ermöglicht.

In einer bevorzugten Ausführungform weist das Dichtungsprofil zwei oder mehr voneinander beabstandete Verankerungsfüße auf, wobei mindestens einer der Verankerungsfüße, vorzugsweise jedoch jeder der zwei oder mehr Verankerungsfüße Ausnehmungen, Querschnittsverminderungen, Querschnittsverdickungen und/oder Fortsätze aufweist. Besonders bevorzugt weist das erfindungsgemäße Dichtungsprofil zwei voneinander beabstandete Verankerungsfüße auf, wobei die Ausnehmungen, Querschnittsverminderungen, Querschnittsverdickungen und/oder Fortsätze jeweils an den Außenseiten der Verankerungsfüße angeordnet sind.

Das Dichtungsprofil besteht bevorzugt aus einem elastomeren Material, vorzugsweise aus EPDM, SBR, CR, NBR oder TPE, bevorzugt EPDM, wobei das elastomere Material vorzugsweise eine Shorehärte von 60-80° aufweist.

In einer insbesondere für Tunneltübbinge geeigneten Ausführungsform der Erfindung weist das erfindungsgemäße Dichtungsprofil einen Profilkörper mit einer nach Einbettung des Dichtungsprofils zum Formteil weisenden Profilbasis, einem der Profilbasis gegenüberliegenden Profilrücken und seitliche Profilflanken auf, wobei zwei voneinander beabstandete Verankerungsfüße sich von der Profilbasis aus erstrecken, deren Querschnitt sich zu den Enden hin schwalbenschwanzartig erweitert. Die Verankerungsfüße können auch eine andere Verankerungsgeometrie aufweisen. Der Profilkörper hat bevorzugt einen im Wesentlichen hexagonalen Querschnitt.

In einem zweiten Aspekt betrifft die vorliegende Erfindung auch eine Dichtanordnung, umfassend ein Formteil aus aushärtbarem Material, insbesondere ein Beton- oder Kunststoffformteil, und ein darin eingebettetes erfindungsgemäßes Dichtungsprofil nach dem ersten Aspekt der Erfindung

Das Formteil kann beispielsweise ein Betontübbing für den Tunnelbau, ein Betonring für einen Schacht oder ein Betonrohr(abschnitt), z.B. für den Kanal- oder Rohrleitungsbau, oder ein Kunststoffrohr, beispielsweise ein GFK-Rohr, sein.

Die Erfindung wird im Folgenden anhand der angehängten Figuren rein zu Veranschaulichungszwecken näher erläutert.
Fig. 1 Schematische Darstellung eines in ein Formteil eingebetteten Dichtungsprofils für Tübbinge nach dem Stand der Technik.
Fig. 2 Schematische Darstellung einer Ausführungsform eines erfindungsgemäßen Dichtungsprofils.
Fig. 3 Schematische Ansicht auf die Profilbasis des in Fig. 2 dargestellten erfindungsgemäßen Dichtungsprofils.
Fig. 4 bis 8 Schematische Ansichten auf die Profilbasis weiterer Ausführungsformen eines erfindungsgemäßen Dichtungsprofils.
Fig. 9 Querschnitt (A) und seitliche Ansicht (B) einer weiteren Ausführungsform eines erfindungsgemäßen Dichtungsprofils.

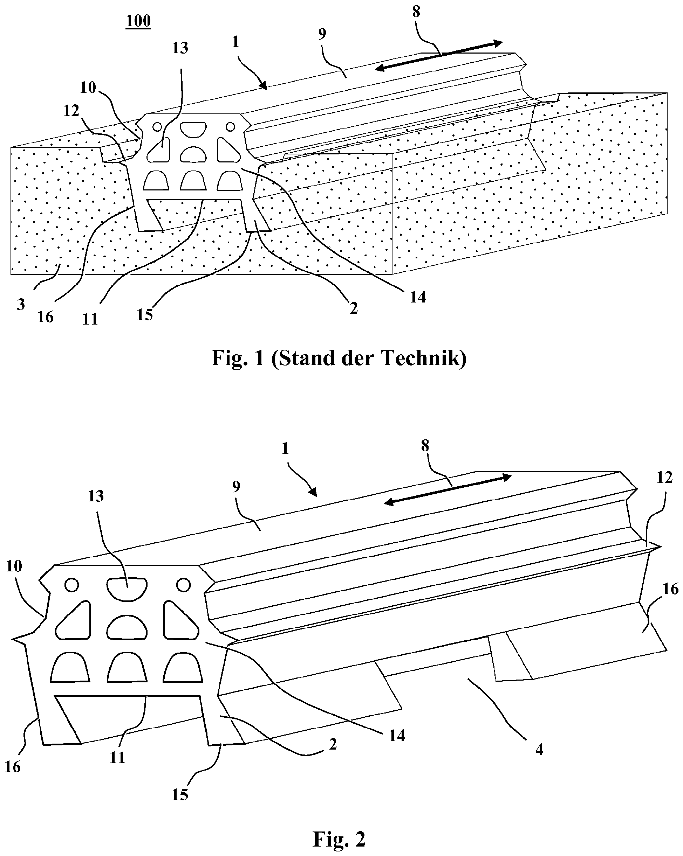

Figur 1 zeigt schematisch eine räumliche Ansicht einer Dichtanordnung 100 nach dem Stand der Technik, umfassend ein Dichtungsprofil 1, das in ein Formteil 3 eingebettet ist. Das Formteil 3 ist hier ein Betontübbing für den Tunnelbau, von dem nur ein Ausschnitt dargestellt ist.

Das strangförmige Dichtungsprofil 1 aus elastomerem Material weist einen im Querschnitt allgemein hexagonalen Profilkörper 14 auf, mit einer zum Formteil 3 weisenden Profilbasis 11, einem der Profilbasis 11 gegenüberliegenden Profilrücken 9 und seitlichen Profilflanken 10. Das Dichtungsprofil 1 ist mittels zweier von der Profilbasis 11 ausgehender schwalbenschwanzförmiger, voneinander beabstandeter Verankerungsfüße 2 in das Formteil 3 eingebettet. Das Dichtungsprofil 1 weist in Längsrichtung 8 des Dichtungsprofils 1 verlaufende Längskanäle 13 auf. Die Verankerungsfüße 2 und der basisseitige Teil des Profilkörpers 14 sind bis zu flankenseitigen Dichtlippen 12 von dem aushärtbaren Material, beispielsweise Beton, umgeben. Die Verankerungsfüße 2 erstrecken sich kontinuierlich in die Längsrichtung 8 des Dichtungsprofils 1 und dienen dazu, zu verhindern, dass in Richtung quer zur Längsrichtung 8 wirkende Kräfte das Dichtungsprofils 1 verschieben bzw. aus dem Formteil 3 herauslösen. Eine Verschiebung in Längsrichtung 8 können die Verankerungsfüße 2 jedoch aufgrund der in Längsrichtung 8 vergleichsweise nur schwach kraftschlüssigen Verbindung mit dem Formteil 3 nicht wirksam verhindern.

Figur 2 zeigt eine Ausführungsformen eines erfindungsgemäßen Dichtungsprofils 1. Zu erkennen ist, dass die Verankerungsfüße 2 sich in der Längrichtung 8 des Dichtungsprofils 1 diskontinuierlich erstrecken. Hier sind Ausnehmungen 4 in den Verankerungsfüßen 2 vorgesehen, in die das aushärtbare Material beim Gießen des Formteils 3 mit hineinfließt, so dass ein Formschluss zwischen Formteil 3 und den Verankerungsfüßen 2 des Dichtungsprofils 1 resultiert, der auch Kräften entgegensteht, die eine Verschiebung des Dichtungsprofils 1 in Längsrichtung 8 bewirken können. Bei der hier dargestellten Ausführungsform sind die Verankerungsfüße 2 abschnittweise vollständig bis zur Profilbasis 11 entfernt. Das ist allerdings nicht notwendig. Vielmehr kann auch ein Teil des Materials der Verankerungsfüße 2 in diesen Bereichen stehen bleiben.

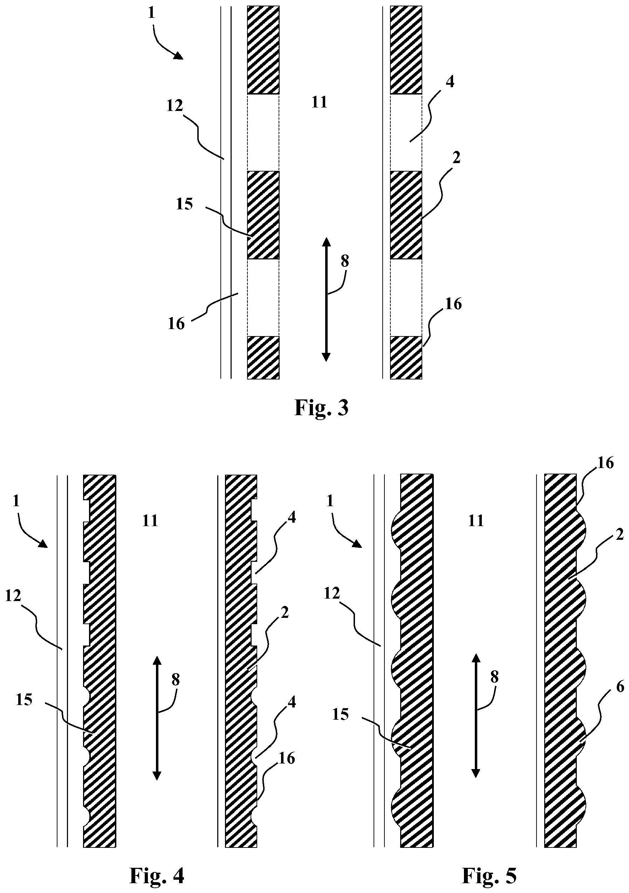

Figur 3 zeigt eine Ansicht auf die Unterseite, d.h. die Profilbasis 11, des in Figur 2 dargestellten Dichtungsprofils 1, wobei die in im Wesentlichen derselben Ebene liegenden Sohlen 15 der Verankerungsfüße 2 der besseren Übersicht halber durch Schraffur hervorgehoben sind. Die Ausnehmungen 4 sind bei der dargestellten Ausfuhrungsform in regelmäßigen Abständen vorgesehen, wobei eine Ausnehmung 4 des ersten Verankerungsfußes 2 jeweils einer Ausnehmung des zweiten Verankerungsfußes gegenüberliegt. Selbstverständlich können die Ausnehmungen 4 bei einem Verankerungsfuß 2 aber auch gegenüber dem anderen Verankerungsfuß 2 versetzt angeordnet sein. Auf diese Weise kann das Dichtungsprofil 1 auch in Längsrichtung 8 mit einem Formteil 3 verzahnt werden. Die Anzahl und Ausdehnung der Ausnehmungen 4 kann den auftretenden Kräften bzw. dem Einsatzzweck entsprechend angepasst werden.

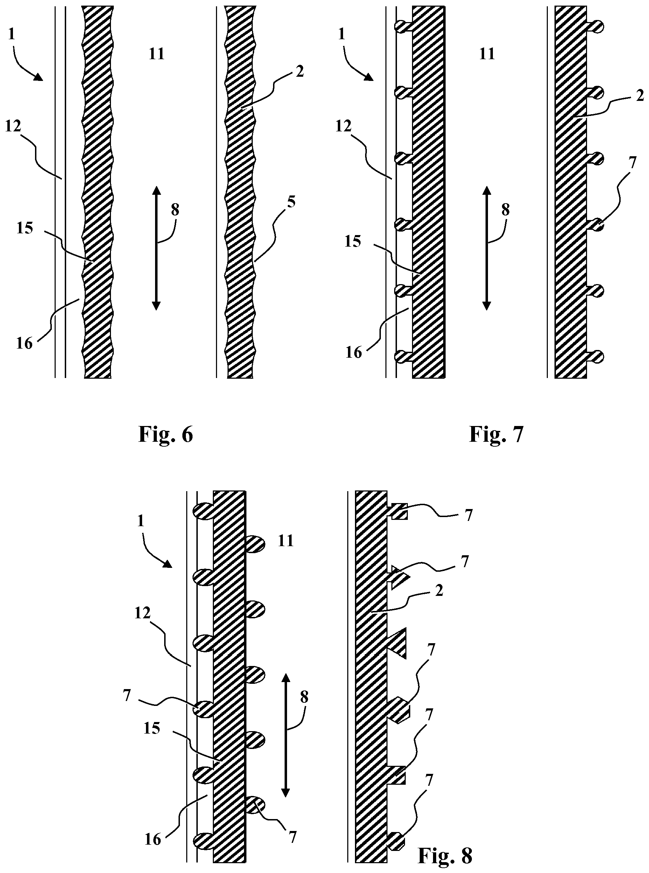

Die Figuren 4 bis 8 zeigen weitere Ausführungsformen eines erfindungsgemäßen Dichtungsprofils 1, wobei hier erneut Ansichten auf die Profilbasis 11 dargestellt sind. Figur 4 zeigt beispielsweise ein Dichtungsprofil 1, bei dem zu Illustrationszwecken verschieden geformte Ausnehmungen 4 vorgesehen sind. Während im oberen Bereich rechteckförmige Ausnehmungen 4 dargestellt sind, sind im unteren Bereich kreisbogenförmige Ausnehmungen 4 dargestellt. Es ist zwar möglich, verschiedene Formen von Ausnehmungen 4 in einem Dichtungsprofil 1 vorzusehen. Dies ist jedoch nicht bevorzugt. Die Ausnehmungen sind hier lediglich an den Außenseiten 16, d.h. den voneinander weg weisenden äußeren Seiten der Verankerungsfüße 2 angeordnet. Sie können aber zusätzlich oder ausschließlich auch an den aufeinander zuweisende Innenseiten der Verankerungsfüße 2 angeordnet sein. Figur 5 zeigt eine Ausführungsform eines erfindungsgemäßen Dichtungsprofils 1 mit Querschnittsverdickungen 6, Figur 6 eine Ausführungsform eines erfindungsgemäßen Dichtungsprofils 1 mit Querschnittsverminderungen 5, und Figur 7 eine Ausführungsform eines erfindungsgemäßen Dichtungsprofils 1 mit Fortsätzen 7. Die Darstellungen zeigen lediglich beispielhaft einige Möglichkeiten für die Ausgestaltung eines erfindungsgemäßen Dichtungsprofils 1. Selbsverständlich sind zahlreiche weitere Varianten möglich. In Figur 8 sind beispielsweise weitere mögliche Formen von Fortsätzen 7 dargestellt. Querschnittsverdickungen 6 und Fortsätze 7 können beispielsweise auch beidseitig an jedem der Verankerungsfüße 2 angeordnet sein (s. z.B. Fig. 8, links).

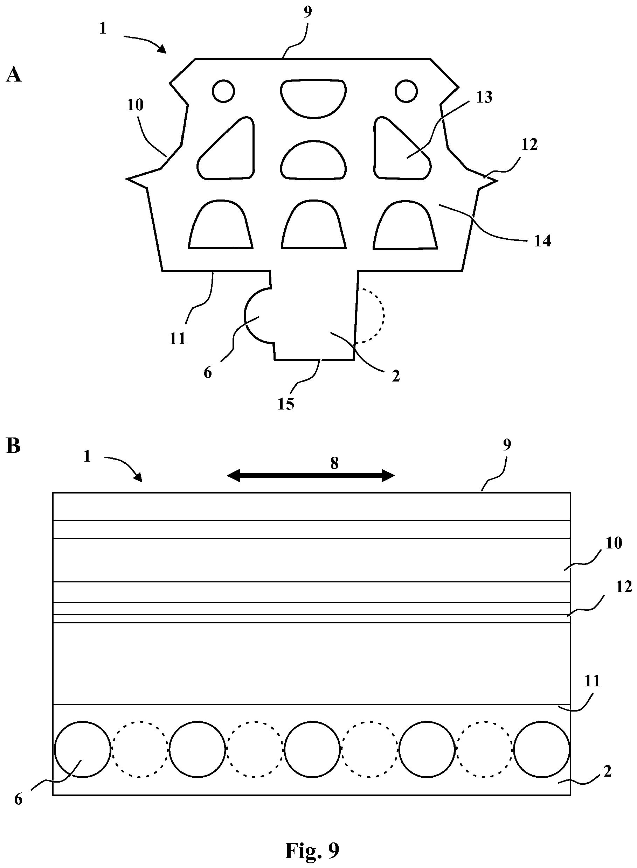

Figur 9 zeigt eine weitere Ausführungsform eines erfindungsgemäßen Dichtungsprofils 1. In Fig. 9A ist ein Querschnitt durch das strangförmige Dichtungsprofil 1 und in Fig. 9B eine seitliche Ansicht eines Abschnitts des in Fig. 9A im Querschnitt gezeigten Dichtungsprofils 1 dargestellt. Die hier dargestellte Ausführungsform eines erfindungsgemäßen Dichtungsprofils 1 weist nur einen mittig von der Profilbasis 11 sich in Richtung des künftigen Formteils 3 erstreckenden Verankerungsfuß 2 auf. Der Verankerungsfuß 2 läuft im Querschnitt zur Sohle 15 des Verankerungsfußes 2 hin leicht konisch zu. Die hier am Verankerungsfuß 2 vorgesehenen halblinsenförmigen Querschnittsverdickungen 6 sind, wie aus Fig. 9B besser ersichtlich ist, in Abständen in Längsrichtung 8 des Dichtungsprofils 1 angeordnet. Die Querschnittsverdickungen 6 sind beidseitig am Verankerungsfuß 2 vorhanden, wobei die Querschnittsverdickungen 6 sich bei dieser Ausführungsform eines erfindungsgemäßen Dichtungsprofils 1 nicht spiegelbildlich gegenüberliegen, sondern versetzt angeordnet sind. Des besseren Verständnisses halber sind in Fig. 9B daher die auf der gegenüberliegenden Seite des Verankerungsfußes 2 angeordneten, in dieser Ansicht allerdings nicht sichtbaren, Querschnittsverdickungen 6 durch unterbrochene Linien angedeutet. Die Querschnittsverdickungen 6 sorgen bei dieser Ausführungsform nicht nur für eine Verankerung in Längsrichtung 8, sondern auch für eine Verankerung in Querrrichtung, d.h. in Richtung von der Sohle 15 zum Profilrücken 9.

## Patentansprüche

1. Dichtungsprofil (1) zur Einbettung in ein Formteil (3) aus aushärtbarem Material, insbesondere ein Beton- oder Kunststoffformteil, wobei das Dichtungsprofil (1) sich in einer Längsrichtung (8) strangförmig erstreckt und mindestens einen Verankerungsfuß (2) zur Verankerung des Dichtungsprofils (1) in dem Formteil (3) aufweist, **dadurch gekennzeichnet, dass** der mindestens eine Verankerungsfuß (2) Ausnehmungen (4), Querschnittsverminderungen (5), Querschnittsverdickungen (6) und/oder Fortsätze (7) aufweist, die sich in der Längrichtung (8) des Dichtungsprofils (1) diskontinuierlich erstrecken.

2. Dichtungsprofil nach Anspruch 1, wobei das Dichtungsprofil zwei oder mehr voneinander beabstandete Verankerungsfüße (2) aufweist, und wobei mindestens einer der Verankerungsfüße, vorzugsweise jeder der zwei oder mehr Verankerungsfüße (2) Ausnehmungen (4), Querschnittsverminderungen (5), Querschnittsverdickungen (6) und/oder Fortsätze (7) aufweisen.

3. Dichtungsprofil nach Anspruch 2, wobei das Dichtungsprofil (1) zwei voneinander beabstandete Verankerungsfüße (2) aufweist, und wobei die Ausnehmungen (4), Querschnittsverminderungen (5), Querschnittsverdickungen (6) und/oder Fortsätze (7) jeweils an den Außenseiten (16) der Verankerungsfüße (2) angeordnet sind.

4. Dichtungsprofil nach einem der vorhergehenden Ansprüche, wobei das Dichtungsprofil (1) aus einem elastomeren Material, vorzugsweise aus EPDM, SBR, CR, NBR oder TPE, bevorzugt EPDM, besteht, und wobei das elastomere Material vorzugsweise eine Shorehärte von 60-80° aufweist.

5. Dichtungsprofil nach einem der vorhergehenden Ansprüche, insbesondere für Tunneltübbinge, mit einem Profilkörper (14) mit einer nach Einbettung des Dichtungsprofils (1) zum Formteil (3) weisenden Profilbasis (11), einem der Profilbasis gegenüberliegenden Profilrücken (9) und seitlichen Profilflanken (10), wobei zwei voneinander beabstandete Verankerungsfüße (2) sich von der Profilbasis (11) aus erstrecken, deren Querschnitt sich zu den Enden hin schwalbenschwanzartig erweitert oder die eine andere Verankerungsgeometrie aufweisen.

6. Dichtanordnung, umfassend ein Formteil (3) aus aushärtbarem Material und ein darin eingebettetes Dichtungsprofil (1) nach einem der vorhergehenden Ansprüche.

7. Dichtanordnung nach Anspruch 6, wobei das Formteil (3) ein Beton- oder Kunststoffformteil, bevorzugt ein Betontübbing für den Tunnelbau, ein Betonring für Schachtbauten, ein Betonrohr für den Kanal- oder Rohrleitungsbau oder ein Kunststoffrohr, bevorzugt ein GFK-Rohr, ist.

## Claims

1. A sealing profile (1) to be embedded in a moulded part (3) of a curable material, in particular a concrete or plastic moulded part, wherein the sealing profile (1) extends strand-like in a longitudinal direction (8) and has at least one anchoring foot (2) for anchoring the sealing profile (1) in the moulded part (3), **characterised in that** the at least one anchoring foot (2) has recesses (4), reductions in cross-section (5), thickenings in cross-section (6), and/or projections (7), which extend discontinuously in the longitudinal direction (8) of the sealing profile (1).

2. The sealing profile in accordance with claim 1, wherein the sealing profile has two or more anchoring feet (2), spaced apart from one another, and wherein at least one of the anchoring feet, preferably each of the two or more anchoring feet (2), have recesses (4), reductions in cross-section (5), thickenings in cross-section (6), and/or projections (7).

3. The sealing profile in accordance with claim 2, wherein the sealing profile (1) has two anchoring feet (2), spaced apart from one another, and wherein the recesses (4), reductions in cross-section (5), thickenings in cross-section (6), and/or projections (7), are each arranged on the outer faces (16) of the anchoring feet (2).

4. The sealing profile in accordance with one of the preceding claims, wherein the sealing profile (1) consists of an elastomeric material, preferably of EPDM, SBR, CR, NBR or TPE, preferably EPDM, and wherein the elastomeric material preferably has a Shore hardness of 60 - 80°.

5. The sealing profile in accordance with one of the preceding claims, in particular for tunnel tubbings, with a profile body (14), with a profile base (11) facing towards the moulded part (3) after the sealing profile (1) has been embedded, a profile back (9) located opposite the profile base, and lateral profile flanks (10), wherein two anchoring feet (2), spaced apart from one another, extend from the profile base (11), the cross-section of which feet widens like a dovetail towards the ends of the feet, or which feet have another anchoring geometry.

6. The sealing arrangement, comprising a moulded part (3) of a curable material, and a therein-embedded sealing profile (1) according to one of the preceding claims.

7. The sealing arrangement according to claim 6, wherein the moulded part (3) is a concrete or plastic moulded part, preferably a concrete tubbing for tunnel construction, a concrete ring for shaft structures, a concrete pipe for canal or pipeline construction or a plastic pipe, preferably a GRP pipe.

## Revendications

1. Profilé d'étanchéité (1) destiné à être incorporé dans une pièce moulée (3) en un matériau durcissable, en particulier une pièce moulée en béton ou en plastique, le profilé d'étanchéité (1) s'étendant en forme de barre dans une direction longitudinale (8) et présentant au moins un pied d'ancrage (2) pour l'ancrage du profilé d'étanchéité (1) dans la pièce moulée (3), **caractérisé en ce que** l'au moins un pied d'ancrage (2) présente des évidements (4), des réductions de section transversale (5), des épaississements de section transversale (6) et/ou des prolongements (7), lesquels s'étendent de façon discontinue dans la direction longitudinale (8) du profilé d'étanchéité (1).

2. Profilé d'étanchéité selon la revendication 1, dans lequel le profilé d'étanchéité présente deux ou plusieurs pieds d'ancrage (2) espacés les uns des autres, et dans lequel l'un au moins des pieds d'ancrage, de préférence chacun parmi les deux ou plusieurs pieds d'ancrage (2), présente des évidements (4), des réductions de section transversale (5), des épaississements de section transversale (6) et/ou des prolongements (7).

3. Profilé d'étanchéité selon la revendication 2, dans lequel le profilé d'étanchéité (1) présente deux pieds d'ancrage (2) espacés l'un de l'autre, et dans lequel les évidements (4), les réductions de section transversale (5), les épaississements de section transversale (6) et/ou les prolongements (7) sont disposés respectivement sur les côtés extérieurs (16) des pieds d'ancrage (2).

4. Profilé d'étanchéité selon l'une des revendications précédentes, dans lequel le profilé d'étanchéité (1) est constitué d'un matériau élastomère, de préférence d'EPDM, de SBR, de CR, de NBR ou de TPE, avantageusement d'EPDM, et dans lequel le matériau élastomère présente de préférence une dureté Shore de 60 à 80°.

5. Profilé d'étanchéité selon l'une des revendications précédentes, en particulier pour des voussoirs de tunnels, avec un corps de profilé (14) présentant une base de profilé (11) tournée vers la pièce moulée (3) après incorporation du profilé d'étanchéité (1), un dos de profilé (9) opposé à la base de profilé et un flanc latéral de profilé (10), dans lequel deux pieds d'ancrage (2) espacés l'un de l'autre s'étendent à partir de la base de profilé (11), dont la section transversale s'élargit en queue d'aronde vers les extrémités ou lesquels présentent une autre géométrie d'ancrage.

6. Dispositif d'étanchéité, comprenant une pièce moulée (3) en un matériau durcissable et un profilé d'étanchéité (1) selon l'une des revendications précédentes, incorporé dans celle-ci.

7. Dispositif d'étanchéité selon la revendication 6, dans lequel la pièce moulée (3) est une pièce moulée en béton ou en plastique, de préférence un voussoir en béton pour la construction d'un tunnel, un anneau en béton pour la construction de puits, un conduit en béton pour la construction de canaux ou de canalisations, ou un conduit en plastique, de préférence un conduit GFK.
